# EUROPÄISCHE PATENTSCHRIFT

(11) **EP 0 400 535 B1**
(45) Veröffentlichungstag und Bekanntmachung des Hinweises auf die Patenterteilung: **06.07.1994**
(21) Anmeldenummer: 90110077.6
(22) Anmeldetag: 28.05.1990
(51) Int. Cl.: F16B 13/00

(54) **Befestigungselement**
Fastening element
Dispositif d'attache

(30) Priorität: 29.05.1989 AT 1282/89
(43) Veröffentlichungstag der Anmeldung: 05.12.1990
(73) Patentinhaber: SFS Industrie Holding AG, 9435 Heerbrugg (CH)
(72) Erfinder: Lanzoni, Maurice, CH-9435 Heerbrugg (CH)
(74) Vertreter: Ludescher, Hans

(56) Entgegenhaltungen:
- EP-A- 0 171 745
- DE-A- 3 733 854
- DE-U- 7 706 596

## Beschreibung

Die Erfindung betrifft ein Befestigungselement zur Montage von Profilen, Rahmen, Platten od. dgl. an einer festen Unterkonstruktion mittels Schrauben und Verankerungsdübeln, wobei die Schraube mit einem über die ganze Länge des Schaftes führenden Gewinde versehen ist, entsprechend aller Merkmale des Oberbegriffes von Anspruch 1 (EP-A-0 171 745).

Solche Befestigungselemente dienen zur Direkt- oder Distanzbefestigung von Profilen, Rahmen, Platten od. dgl., zum Beispiel an einem Mauerwerk oder einer darunterliegenden festen Unterkonstruktion aus Holz, Ziegeln, Metall od. dgl. Es ist bereits eine Distanz-Schraube mit einer Ausnehmung zum Einstecken eines Werkzeuges bekannt geworden, welche werkzeugseitig einen kürzeren, dickeren Gewindeteil und an ihrem freien Ende einen teilweise mit Gewinde versehenen, dünneren Teil aufweist. Am Uebergang dieser beiden verschiedenen dicken Gewindeteile muss eine Spannnut mit Schneidkante vorgesehen werden, um dadurch die materialverdrängende Wirkung des dickeren Gewindeteiles zu reduzieren. Eine solche Ausführung ist besonders geeignet zur Befestigung von Holzprofilen an einer festen Unterkonstruktion. Wenn hingegen Metall-Profile mit relativ dünnen Stegen befestigt werden sollen, dann reicht in der Regel allein das Gewinde des dickeren Abschnittes der Schraube nicht aus, um eine sichere Befestigung zu gewährleisten.

Bei einer bekannten Ausführung (AT-PS 237 870) ist ein aus einem Verankerungsdübel und einer Schraube bestehendes Befestigungselement vorgesehen, wobei die Schraube mit einem über die ganze Lange des Schaftes führenden Gewinde versehen ist.

Es ist ferner eine Schraubenkombination bekannt (DE-OS 33 10 321), welche zum gegenseitigen Verschrauben von Gegenständen dient. Diese Schraubenkombination besteht aus einem Schaftteil und einem Mutterteil, wobei bei der Abstandsmontage der Gegenstände dieser Abstand nach der Montage durch Drehung am Schaftteil oder am Mutterteil bei Stillstand des anderen Teiles in Grenzen verändert werden kann. Durch den Einsatz eines Mutterteiles, der ähnlich einem Dübel wirkt, und eines Verankerungsdübels sowie ferner eines Schraubenteiles sind drei Teile erforderlich, welche beachtliche Durchmesserunterschiede aufweisen. Es ist hier ein erster Gewindeabschnitt am freien Ende des Schaftes zum Eindrehen in einen Verankerungsdübel ausgebildet und ein zweiter, schraubenkopfnaher Gewindeabschnitt mit grösserem Aussendurchmesser als der erste Gewindeabschnitt vorgesehen. Es ist aber keine Schraube mit einem über die ganze Länge des Schaftes führenden Gewinde vorgesehen. Die beiden Gewindeabschnitte weisen unterschiedliche Gewindesteigungen auf.

Die vorliegende Erfindung hat sich daher zur Aufgabe gestellt, ein Befestigungselement zu schaffen, welches zur Direkt- oder Distanz-Befestigung von Profilen, Rahmen, Platten od. dgl. aller Ausführungen und Materialien geeignet ist, ob dies nun Voll-oder Hohlkörper sind.

Erfindungsgemäss gelingt dies durch die Merkmale des Anspruch 1, wobei unter anderem ein erster Gewindeabschnitt am freien Ende des Schaftes zum Eindrehen in einen Verankerungsdübel ausgebildet ist und ein zweiter, schraubenkopfnaher Gewindeabschnitt mit grösserem Aussendurchmesser als der erste Gewindeabschnitt vorgesehen ist und beide Gewindeabschnitte die gleiche Gewindesteigung aufweisen, dass eine in Montagelage des Befestigungselementes in das zu befestigende Profil, den Rahmen, die Platte od. dgl. eingreifende und beim Einschraubvorgang mit dem schraubenkopfnahen Gewindeabschnitt in Wirkverbindung bringbare Dübelhülse fest und einstückig mit dem Verankerungsdübel ausgebildet ist und dass der aus Verankerungsdübel und Dübelhülse bestehende Dübel über dessen ganze Länge einen zumindest annähernd gleichbleibenden Aussendurchmesser aufweist.

Es ist daher neben dem zum Einschrauben in die feste Unterkonstruktion notwendigen Verankerungsdübel zugleich eine Dübelhülse vorgesehen, welche den notwendigen festen Sitz innerhalb der zu befestigenden Profile, Rahmen, Platten od. dgl. ermöglicht. Durch den entsprechend grösseren Durchmesser des schraubenkopfnahen Gewindeabschnittes ist gewährleistet, dass die zu befestigenden Profile, Rahmen, Platten od dgl. auch bei entsprechend vielen Hohlräumen in denselben sicher gehalten werden, da das Material der Dübelhülse relativ weit in die Hohlkammern bzw. Ausnehmungen von Profilen eindringen kann zumal ja der relativ grosse Durchmesser des schraubenkopfnahen Gewindeabschnittes ein weiteres Auseinanderdrängen des Materials der Dübelhülse bewirkt.

Durch das erfindungsgemässe Befestigungselement ist sowohl bei einer Befestigung in einem Vollprofil als auch bei der Befestigung von Hohlprofilen ein ausreichender Rückhalt gegeben, da das eindringende Gewinde eine Verdrängung der Dübelhülse nach aussen hin und somit eine Anpressung an die Bohrungswandung oder eben die Profilstege bewirkt.

Damit die Schraube in einfacher Weise mit dem Dübel für den Einsatz vorbereitet werden kann, entspricht der freie Innendurchmesser der Dübelhülse annähernd dem Aussendurchmesser des dem freien Ende des Schaftes der Schraube zugewandten Gewindeabschnittes. Die Schraube kann also mit ihrem ersten Gewindeabschnitt direkt durch die Dübelhülse eingeschoben werden, so dass hier also noch keine Drehbewegung erfoderlich ist. Es ist dann bereits der erste Gewindeabschnitt der Schraube zum Eindrehen in den den Verankerungsdübel bildenden Teil des Dübels gegeben und ausserdem kann zugleich der zweite Gewindeabschnitt mit dem grösseren Durchmesser in die Dübelhülse eindringen.

Ferner wird vorgeschlagen, dass die Dübelhülse einen über wenigstens annähernd deren ganze Länge führenden Längsschlitz aufweist, der am freien Ende der Dübelhülse offen oder durch einen abreiss- oder brechbaren Steg verschlossen ist. Durch diesen Längsschlitz ist es möglich, dass sich die Dübelhülse beim Eindrehen des zweiten Gewindeabschnittes mit dem relativ grossen Durchmesser gut ausweiten kann, ohne dass die Dübelhülse unter Umständen unkontrolliert zerreissen wird. Es ist daher stets ein ordnungsgemässer Eingriff in dem zu befestigenden Profil od. dgl. möglich.

Aus Fertigungsgründen ist es zweckmässig, wenn eine durch den Längsschlitz gedachte Ebene mit Abstand von der Dübelmittelachse liegt. Bekanntlich können bei der Herstellung von Kunststoffspritzgussteilen entsprechende Schlitze nur durch seitlich einschiebbare und wieder zurückziehbare Formteile geschaffen werden. Es hat sich als zweckmässig erwiesen, wenn diese einschiebbaren Teile nicht direkt in einer radialen Ebene zum herzustellenden Gegenstand liegen.

Nach einem weiteren Vorschlag weisen der Verankerungsdübel und die Dübelhülse eine Aussenprofilierung in Form von sägezahnartigen Rippen auf. Dadurch ist ein sicherer Halt in den zum Beispiel bei Kunststoff-Fensterprofilen vorgesehenen Stahleinlagen möglich, so dass praktisch eine formschlüssige Verankerung nach dem Eindrehen der Schrauben gegeben ist.

Dabei wirkt sich besonders vorteilhaft aus, wenn die sägezahnartigen Rippen am Verankerungsdübel einerseits und die sägezahnartigen Rippen an der Dübelhülse andererseits gegeneinander gerichtet sind. Durch die erfindungsgemässe Befestigungsart sollen ja der Verankerungsdübel und die Dübelhülse in entgegengesetzter Richtung Kräfte aufnehmen können, das heisst, der Verankerungsdübel soll nicht aus der Bohrung in der festen Unterkonstruktion herausziehbar sein und andererseits soll ja das zu befestigende Profil od. dgl. nicht vom festen Untergrund abziehbar sein, die Dübelhülse darf also nicht an der Rückseite des Profils herausgezogen werden können. Hier wirkt sich diese gegeneinander gerichtete Anordnung der sägezahnartigen Rippen besonders vorteilhaft aus.

In diesem Zusammenhang ist es besonders zweckmässig, wenn die sägezahnartigen Rippen an der Dübelhülse von in zwei oder mehreren, axial zueinander versetzten Rippenabschnitten gebildet sind, welche jeweils über einen Teilbereich des Umfangs der Dübelhülse führen. Dadurch ist die Gewähr gegeben, dass bei jeder beliebigen Einsatztiefe in einem zu befestigenden Profil od. dgl. entsprechende Rippen zur Verfügung stehen, die in benachbarte Vertiefungen oder Erhebungen in einem Profil od. dgl. bzw. unterhalb oder oberhalb einer in das Profil eingesetzten Stahleinlage einrasten können.

Damit auch eine sichere Verankerung des ersten Gewindeabschnittes der Schraube in dem Verankerungsdübel ermöglicht wird, weist die innere Längsausnehmung des Verankerungsdübels mehrere am Umfang verteilt angeordnete Längsrippen mit dazwischen verbleibenden Nuten auf. Es ist daher ein sicheres Eindrücken der Gewindeflanken auf der Innenseite des Verankerungsdübels gewährleistet und ausserdem ein entsprechendes radiales Anpressen des Verankerungsdübels an die Bohrungswandung.

Zur Verbesserung der Verdrehsicherheit beim Einsetzen des Verankerungsdübels wird vorgeschlagen, dass der Verankerungsdübel in annähernd radialer Richtung, jedoch spitzwinklig zu dessen Längsachse ausgerichtete, frei auskragende, flügelartige Stege aufweist. Durch die Anordnung dieser Stege ist wohl ein einfaches Eindrücken des Dübels in die Bohrung im festen Untergrund möglich, jedoch verhindern diese flügelartige Stege ein Verdrehen des Dübels beim Eindrehen der Schraube, so lange die Anpresskraft des Verankerungsdübels an der Bohrungswandung noch nicht ausreichend ist.

Damit beim Eindringen des ersten Gewindeabschnittes in den Verankerungsdübel dieser sich in radialer Richtung entsprechend optimal aufweiten kann, wird vorgeschlagen, dass der Verankerungsdübel über den jeweiligen Bereich eines flügelartigen Steges geführte Axialschlitze aufweist.

Eine zweckmässige Ausführung liegt darin, dass an dem der Dübelhülse zugewandten Ende des Verankerungsdübels zwei in axialer Richtung aufeinander folgende Paare von flügelartigen Stegen vorgesehen sind und an dem freien Endbereich des Verankerungsdübels ein oder zwei Paare von Schlitzabschnitten mit zu den flügelartigen Stegengleicher Winkelausrichtung bezogen auf die Dübelmittelachse ausgebildet sind. Es ist damit eine optimale Kombination von Verdrehsicherheit des Verankerungsdübels und einer ausreichenden Ausweitmöglichkeit desselben in der Bohrung möglich, so dass ein ordnungsgemässer Sitz des Dübels nach dem Eindrehen der Schraube gewährleistet ist.

Eine besonders vorteilhafte Ausbildung liegt vor, wenn der Schraubenkopf zumindest annähernd den gleichen Aussendurchmesser aufweist wie der Dübel. Durch diese Massnahme kann auch der Schraubenkopf versenkt in einem zu befestigenden Profil untergebracht werden, bildet also keinen störenden Faktor an der Profiloberfläche und ausserdem ist dadurch nur eine Bohrung gleichen Durchmessers notwendig, da ja Dübel und Schraube durch das einheitlich grosse Loch eingeführt werden können.

Gerade in Hinblick auf die Herstellung der Schraube ist es zweckmässig, wenn der Querschnitt des Schraubenrohlings beim schraubenkopfnahen Gewindeabschnitt annähernd 30 % grösser ist als der Querschnitt des Schraubenrohlings beim ersten Gewindeabschnitt. Es kann dadurch von einem abgestuften Vorrohling ausgegangen werden mit zwei verschiedenen Durchmesserbereichen, wobei jeweils die optimale Gewindehöhe erzielt wird. Ausserdem ist dadurch die Gewähr gegeben, dass die Dübelhülse beim weiteren Eindrehen der Schraube nicht schon bereits duch den Kern des zweiten Gewindeabschnittes entsprechend aufgeweitet wird, sondern dass echt die Gewindeflanke eingreifen kann.

Beim zweiten Gewindeabschnitt ist es von besonderem Vorteil, wenn zwischen den Gewindegängen relativ viel Platz bleibt und ausserdem die Gewindeflanken relativ weit vom Kerndurchmesser abstehen. Es wird deshalb vorgeschlagen, dass der Aussendurchmesser des schraubenkopfnahen Gewindeabschnittes annähernd 30 % grösser ist als dessen Kerndurchmesser. Es wird also das Optimum bei einer Schraubenherstellung herausgeholt, wobei gerade durch die relativ hohen Gewindeflanken die Reibung der Schraube beim Eindrehen derselben wesentlich verringert wird. Es greifen praktisch nur die Randbereiche der Gewindeflanken in die Dübelhülse ein, so dass der Kern der Schraube im zweiten Gewindeabschnitt gar nicht mit der Innenwandung der Dübelhülse in Berührung kommt. Es ist dadurch ein wesentlich leichteres Eindrehen der Schrauben bei trotzdem verbesserter gegenseitiger Arretierung eines Profiles und eines festen Unterbaues gegeben.

Von wesentlichem Vorteil ist auch gerade bezüglich der geringen Reibung beim Eindrehen der Schraube und zur Verhinderung eines Einschneidens in die Dübelhülse, wenn die Gewindeflanke des schraubenkopfnahen Gewindeabschnittes an ihrem äussersten Rand eine Dicke von wenigstens 0,2 - 0,6 mm, vorzugsweise 0,4 mm aufweist. Das Gewinde hat dadurch praktisch einen trapezförmigen Querschnitt, es ist also der Gewindeflanke die üblicherweise schneidende freie Kante genommen. Der schraubenkopfnahe Gewindeabschnitt kann daher nicht in die Dübelhülse einschneiden bzw. diese zerschneiden, sondern drückt lediglich an die Innenwandung der Dübelhülse und drängt diese in die freibleibenden Nischen der Profile.

Damit eine möglichst starke Aufweitung bzw. Verdrängung der Dübelhülse erreicht wird, ist es zweckmässig, wenn der Aussendurchmesser des schraubenkopfnahen Gewindeabschnittes annähernd dem Durchmesser des Schraubenkopfes entspricht.

Da die beiden Gewindeabschnitte die gleiche Gewindesteigung aufweisen, ist zur Verbesserung der Halterung der Schraube in dem Verankerungsdübel vorgesehen, dass der erste, dem freien Ende des Schaftes der Schraube zugewandte Gewindeabschnitt zweigängig ausgeführt ist. Ausserdem ist eine solche Ausführung auch von der Fertigungsseite her gesehen optimaler, da mit dem zweigängigen Gewindeabschnitt und dem schraubenkopfnahen Gewindeabschnitt infolge der verschiedenen Materialverteilung von einem gleichen Ausgangsquerschnitt ausgegangen werden kann.

Damit das Eindrehen der Schraube in den Verankerungsdübel erleichtert wird, weist das freie Ende des Schaftes der Schraube eine Eindringspitze auf. Es ist daher ausserdem möglich, eine solche Schraube direkt in eine Holzkonstruktion einzuschrauben, wobei dann allerdings nur die Dübelhülse, welche in das Profil eingreift, benötigt würde.

Eine vorteilhafte Ausführung liegt ferner darin, dass am Uebergangsbereich zwischen Dübelhülse und Verankerungsdübel zwei diametral einander gegenüberliegende und um eine Gewindesteigung der Schraube axial zueinander versetzte und entsprechend der Gewindeneigung ausgerichtete Stege oder Noppen in das Dübelinnere abragen. Dadurch besteht die Möglichkeit, Schrauben und Dübel auf die Montage vorzubereiten, wobei die Schrauben unverlierbar im Dübel gehalten werden, wobei durch die am freien Ende der Schraube nach dem Einstecken in den Dübel eingreifenden Stege oder Noppen eine Rückziehsicherheit gegeben ist. Sollte daher der Dübel nicht richtig eingeschoben worden sein, so kann durch Ziehen an der Schraube selbst auch der Dübel wiederum herausgeholt werden. Es ist daher eine zumindest vorübergehende Lagersicherung zwischen Dübel und Schraube in axialer Richtung möglich, so dass auch eine entsprechende Magazinierung denkbar wäre.

Die erfindungsgemässen Merkmale und besondere Vorteile werden in der nachstehenden Beschreibung anhand der Zeichnungen noch näher erläutert. Es zeigen:

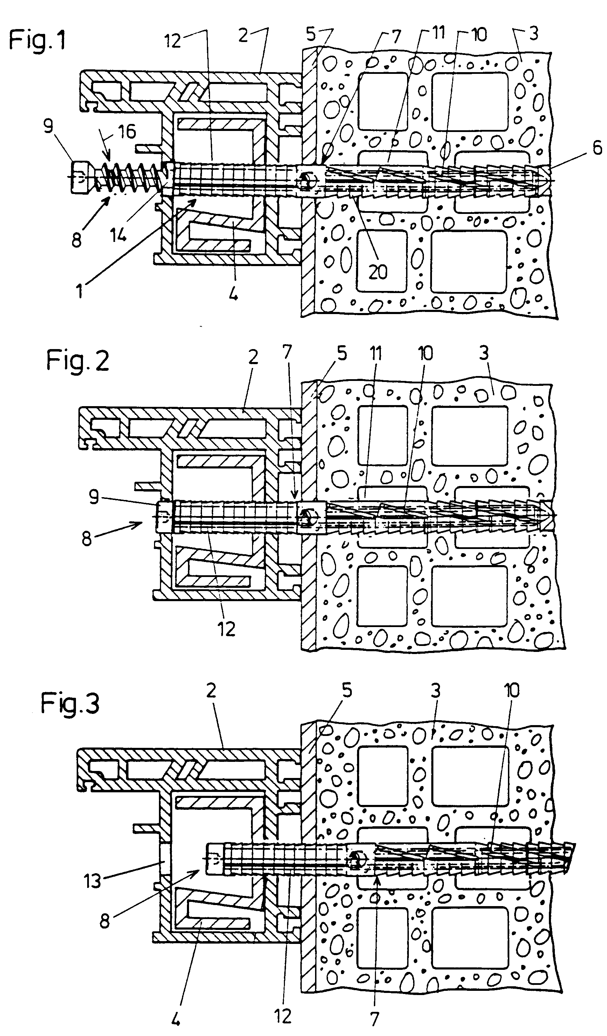

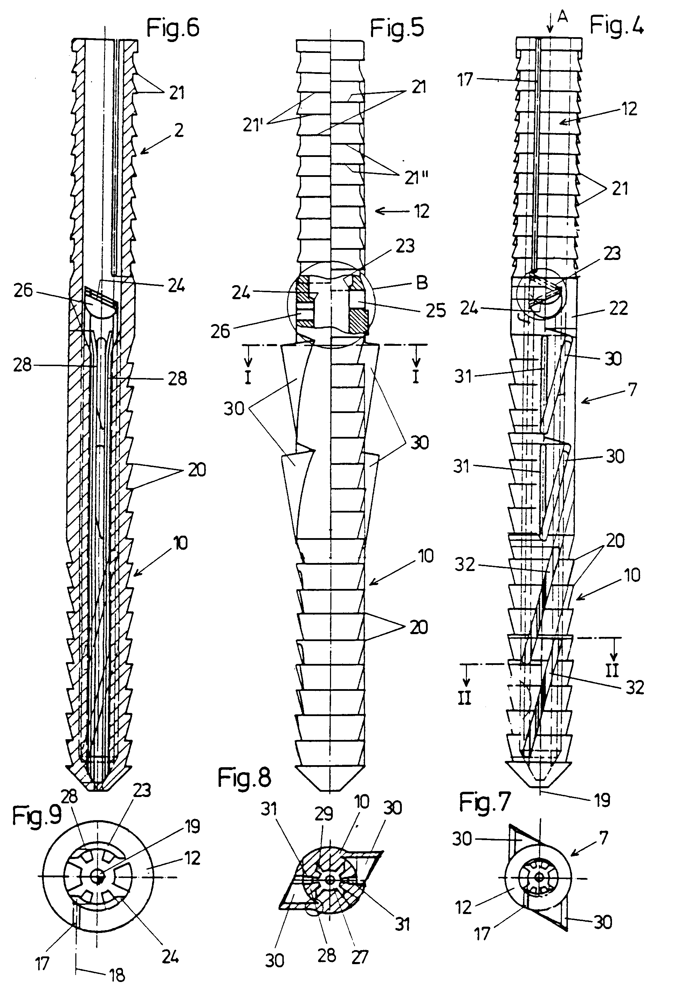

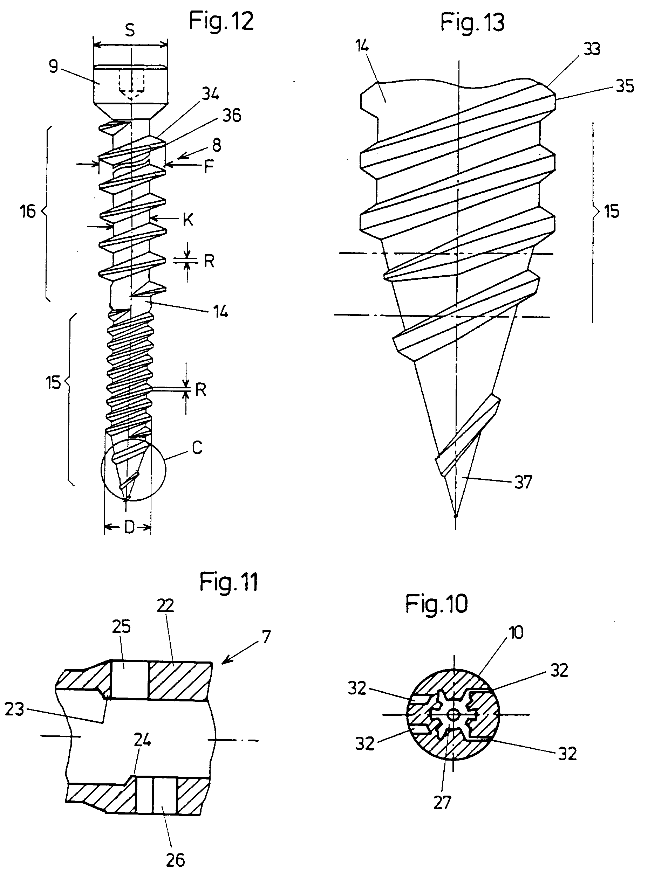

Fig. 1 einen Schnitt durch ein an einem Mauerwerk befestigtes Profil, wobei das Befestigungselement bis zur notwendigen Tiefe eingedrückt bzw. eingeschlagen ist; Fig. 2 die gleiche Darstellung, wobei jedoch die Schraube des Befestigungselementes bereits in ihre endgültige Lage eingedreht worden ist; Fig. 3 eine gleiche Befestigungsart wie in den Fig. 1 und 2 dargestellt, wobei jedoch der aus Verankerungsdübel und Dübelhülse bestehende Dübel tiefer gesetzt ist; Fig. 4 einen Dübel in Vorderansicht; Fig. 5 den Dübel in einer um 90^{o} dazu verdrehten Vorderansicht; Fig. 6 einen Längsschnitt durch den Dübel; Fig. 7 eine Ansicht des Dübels von oben; Fig. 8 einen Schnitt nach der Linie I - I in Fig. 5; Fig. 9 eine Ansicht A des Dübels von oben gemäss Fig. 4, vergrössert dargestellt; Fig. 10 einen Schnitt nach der Linie II - II in Fig. 4; Fig. 11 vergrössert dargestellt das Detail B in Fig. 5; Fig. 12 eine Ansicht der Schraube; Fig. 13 das Detail C der Schraube gemäss Fig. 12.

Das Befestigungselement 1 dient zur Montage von Profilen 2, Rahmen, Platten od. dgl. an einer festen Unterkonstruktion 3. In den Zeichnungen ist ein Ausführungsbeispiel dargestellt, bei welchem ein Kunststoffhohlprofil 2, welches durch ein Stahlprofil 4 verstärkt ist, an einer aus Betonsteinen gebildeten festen Unterkonstruktion 3 befestigt werden soll. Bei der dargestellten Ausführung liegt das Profil 2 praktisch an der festen Unterkonstruktion 3 bzw. am Abschlussverputz 5 an, doch besteht mit dem erfindungsgemässen Befestigungselement die Möglichkeit, hier jeden notwendigen Abstand für einen eventuellen Höhen- bzw. Seitenausgleich eines Rahmens oder eines Profiles einzuhalten und trotzdem eine ordnungsgemässe Befestigung durch das Befestigungselement 1 zu erzielen. Durch das Profil 2 und das Stahlprofil und bis in die feste Unterkonstruktion 3 hinein wird eine Bohrung 6 angefertigt, in die dann der Dübel 7 mit der bereits eingesetzten Schraube 8 eingeschlagen wird. Nach dem Einsetzen wird die Schraube in den Dübel 7 hineingedreht, und zwar kann dies soweit erfolgen, bis der Schraubenkopf 9 praktisch an der entsprechenden Oberfläche des Profils 2 versenkt ist und somit die Durchgangsbohrung verschliesst. Durch entsprechende Länge des Verankerungsdübels 10 können ohne Probleme auch Hohlräume 11 in der festen Unterkonstruktion 3 überbrückt werden.

Bei der Ausführung nach Fig. 3 ist das Befestigungselement 1 weiter versenkt in dem zu befestigenden Profil 2 angeordnet, wobei dann auch der Verankerungsdübel 10 weiter in die feste Unterkonstruktion eingreift. Es ist bei einer solchen Ausführung auch denkbar, die Dübelhülse 12 etwas länger auszuführen, so dass trotzdem der Schraubenkopf 9 mit der Eingangsöffnung 13 bündig abschliessen kann. Durch die Verlängerung der Dübelhülse 12 in Richtung zur festen Unterkonstruktion 3 hin wird eine höhere Reibung der Dübelhülse 12 entgegengesetzt, da ja die Aussenwandung der Dübelhülse 12 im Bereich der festen Unterkonstruktion nicht so stark ausweichen kann, wie dies eben im Profil 2 der Fall wäre.

Die besondere Ausbildung und Konstruktion des Dübels und der Schraube wird nachstehend anhand der Fig. 4 bis 13 näher erläutert.

Die Schraube 8 ist mit einem über die ganze Länge des Schaftes 14 führenden Gewinde versehen, wobei ein erster Gewindeabschnitt 15 am freien Ende des Schaftes 14 zum Eindrehen in den Verankerungsdübel 10 ausgebildet ist und ein zweiter, dem Schraubenkopf benachbarter Gewindeabschnitt 16 mit grösserem Aussendurchmesser als der erste Gewindeabschnitt 15 vorgesehen. Beide Gewindeabschnitte 15 und 16 weisen die gleiche Gewindesteigung auf.

Der Dübel 7 besteht aus einer Dübelhülse 12 und einem Verankerungsdübel 10, wobei diese beiden Teile fest und einstückig miteinander ausgebildet sind. Die Dübelhülse 12 liegt in Montagelage des Befestigungselementes 1 in dem zu befestigenden Profil 2 und wird beim Einschraubvorgang mit dem schraubenkopfnahen Gewindeabschnitt 16 der Schraube in Wirkverbindung gebracht.

Der aus dem Verankerungsdübel 10 und der Dübelhülse 12 gebildete Dübel 7 weist über dessen ganze Länge einen zumindest annähernd gleichbleibenden Aussendurchmesser auf.

Der freie Innendurchmesser der Dübelhülse 12 entspricht annähernd dem Aussendurchmesser des dem freien Ende des Schaftes 14 der Schraube 8 zugewandten Gewindeabschnittes 15, so dass dieser Gewindeabschnitt 15 ohne Drehvorgang in den Bereich der Dübelhülse 12 eingeschoben werden kann.

Die Dübelhülse 12 weist einen über wenigstens annähernd deren ganze Länge führenden Längsschlitz 17 auf, der bei der gezeigten Ausführungsform zum freien Ende der Dübelhülse 12 hin offen ausgeführt ist. Es wäre aber auch im Rahmen der Erfindung denkbar, am freien Ende der Dübelhülse 12 einen abreissbaren oder abbrechbaren Steg vorzusehen, der erst beim Eindrehen der Schraube aufgebrochen wird. Wie aus den Fig. 4, 7 und 9 eindeutig ersichtlich ist, liegt eine durch den Längsschlitz 17 gedachte Ebene 18 mit Abstand von der Dübelmittelachse 19.

Der Verankerungsdübel 10 und die Dübelhülse 12 weisen eine Aussenprofilierung in Form von sägezahnartigen Rippen 20 und 21 auf, so dass die ordnungsgemässe Verankerung in der festen Unterkonstruktion und auch in dem zu befestigenden Profil gewährleistet ist. Diese sägezahnartigen Rippen 20, 21 am Verankerungsdübel 10 einerseits und an der Dübelhülse 12 andererseits sind gegeneinander gerichtet, wie eindeutig den Zeichnungen entnommen werden kann. Es ist dadurch entsprechend der Belastung und der Auszugsrichtung der miteinander zu befestigenden Teile eine optimale Gegenarretierung möglich.

Besonders vorteilhaft ist eine besondere Ausbildung der sägezahnartigenRippen 21 im Bereich der Dübelhülse 12. Es sind hier zwei oder mehrere, in axialer Richtung zueinander versetzte Rippenabschnitte 21′ bzw. 21˝ vorgesehen, welche jeweils über einen Teilbereich des Umfangs der Dübelhülse 12 führen. Es sind dadurch in geringeren axialen Abständen Einrastmöglichkeiten der Dübelhülse 12 in Stege des zu befestigenden Profils 2 möglich.

Am Uebergangsbereich 22 zwischen der Dübelhülse 12 und dem Verankerungsdübel 10 sind zwei diametral gegenüberliegende und um eine Gewindesteigung der Schraube 8 axial zueinander versetzte und entsprechend der Gewindeneigung ausgerichtete Stege 23, 24 oder entsprechende Noppen vorgesehen, die in das Dübelinnere abragen. Unmittelbar an diese Stege 23, 24 oder Noppen anschliessend sind in Richtung zum Verankerungsdübel 10 hin Ausnehmungen 25, 26 vorgesehen, so dass diese Stege 23, 24 frei abragen können. Es ist dadurch beim Einstecken einer Schraube in den Dübel 7 eine Einrastung der Stege 23 und 24 im Bereich des freien Endes des Schraubenschaftes möglich, so dass eine provisorische Verriegelung zwischen Schraube und Dübel erzielt wird.

Diese besondere Ausführung ist in einem mittleren, geschnittenen Bereich in Fig. 5 sowie in der vergrösserten Darstellung nach Fig. 11 gezeigt.

Wie insbesondere den Fig. 6, 8 und 10 entnommen werden kann, weist die innere Längsausnehmung 27 des Verankerungsdübels 10 mehrere am Umfang verteilt angeordnete Längsrippen 28 auf mit dazwischen verbleibenden Nuten 29. Diese Bereiche des Verankerungsdübels 10 liegen daher nicht umfangsgeschlossen an dem einzudrehenden Gewindeabschnitt 15 der Schraube 8 an, sondern lediglich an radial zueinander versetzten Teilbereichen, so dass die Reibung zum Eindrehen wesentlich verringert ist, aber trotzdem ein ausreichender Halt gegen ein Herausziehen gewährleistet ist.

Um die Verdrehsicherheit des Dübels 7 bis zur entsprechenden radialen Ausdehnung des Verankerungsdübels 10 zu erreichen, sind am Verankerungsdübel 10 in annähernd radialer Richtung, jedoch spitzwinklig zu dessen Längsachse 19 ausgerichtete, frei auskragende, flügelartige Stege 30 vorgesehen. Ueber den jeweiligen Bereich eines flügelartigen Steges 30 sind Axialschlitze 31 vorgesehen, welche die Wandung des Verankerungsdübels 10 durchdringen.

Beim gezeigten Ausführungsbeispiel sind an dem der Dübelhülse 12 zugewandten Ende des Verankerungsdübels 10 zwei in axialer Richtung aufeinanderfolgende Paare von flügelartigen Stegen 30 vorgesehen. Am freien Endbereich des Verankerungsdübels 10 sind ein oder zwei Paare von Schlitzabschnitten 32 vorgesehen, welche in zu den flügelartigen Stegen gleicher Winkelausrichtung bezogen auf die Dübelmittelachse 19 angeordnet sind. Es ist dadurch eine ausgezeichnete Aufweitmöglichkeit des Verankerungsdübels 10 beim Eindrehen der Schraube 8 gegeben.

Anhand der Fig. 12 und 13 wird nun noch auf die verschiedenen Details bezüglich der Schraube 8 hingewiesen. Der Schraubenkopf 9 weist zumindest annähernd den gleichen Aussendurchmesser auf wie der Dübel 7, so dass eine einzige Bohrung in der festen Unterkonstruktion und in dem zu befestigenden Profil angebracht werden muss, wobei trotzdem der Schraubenkopf 9 in das zu befestigende Profil versenkt werden kann.

Der Kerndurchmesser K des zweiten Gewindeabschnittes 16 entspricht annähernd dem Aussendurchmesser D des ersten Gewindeabschnittes 15 der Schraube 8. Der Querschnitt des Schraubenrohlings ist im Bereich schraubenkopfnahen Gewindeabschnittes 16 ist annähernd 30 % grösser als dessen Kerndurchmesser K. Die Gewindeflanken 33, 34 beider Gewindeabschnitte 15, 16 weisen an ihrem äussersten Rand 35, 36 eine Dicke R von wenigstens 0,2 bis 0,6 mm, vorzugsweise von 0,4 mm auf. Es ist dadurch durch die Gewindeflanken eine entsprechende Abstützung bzw. ein Verdrängen des Dübelmaterials möglich, ohne dass eine Schneidwirkung auftritt.

Der Aussendurchmesser F des schraubenkopfnahen Gewindeabschnittes 16 entspricht wiederum annähernd dem Durchmesser S des Schraubenkopfes 9.

Der erste, dem freien Ende des Schaftes 14 zugewandte Gewindeabschnitt 15 der Schraube 8 ist zweigängig ausgeführt, so dass ein wesentlich besserer Halt der Schraube im Verankerungsdübel 10 gewährleistet ist. Auch zur Herstellung der Schraube wirkt sich dies positiv aus, zumal ja die beiden Gewindeabschnitte 15 und 16 die gleiche Gewindesteigung aufweisen.

Das Eindrehen der Schraube in den Dübel wird wesentlich verbessert, wenn das freie Ende des Schaftes 14 eine Eindringspitze 37 aufweist. Die erfindungsgemässe Schraube dringt daher sehr leicht in den Verankerungsdübel 10 ein und kann durch diese besondere Ausgestaltung auch für den direkten Einsatz beispielsweise in eine Unterkonstruktion aus Holz eingeführt werden.

Das erfindungsgemässe, aus Dübel 7 und Schraube 8 bestehende Befestigungselement stellt eine wesentliche Verbesserung bei der Befestigung von Profilen, Rahmen, Platten od. dgl. an einer festen Unterkonstruktion dar. Es ist nicht nur eine ordnungsgemässe Befestigung auf rationelle Art und Weise möglich, sondern durch entsprechendes Lösen der Schraube 8 ist jederzeit ein Nachjustieren bzw. ein Einrichten des zu befestigenden Rahmens gegenüber der festen Unterkonstruktion möglich, wobei eine ausreichende Befestigung auch dann gegeben ist, wenn das zu befestigende Profil nicht unmittelbar an der Unterkonstruktion anliegt, sondern mit entsprechendem Abstand von dieser gehalten werden soll.

## Patentansprüche

1. Befestigungselement aus Schraube und Verankerungsdübel zur Montage von Profilen, Rahmen, Platten oder dergleichen an einer festen Unterkonstruktion, wobei die Schraube einen ersten Gewindeabschnitt (15) am freien Ende des Schaftes (14) zum Eindrehen in einen Verankerungsdübel (10) und einen zweiten, schraubenkopfnahen Gewindeabschnitt (16) mit größerem Außendurchmesser als der erste Gewindeabschnitt (15) aufweist und beide Gewindeabschnitte (15, 16) die gleiche Gewindesteigung haben, **dadurch gekennzeichnet**, daß mit dem Verankerungsdübel (10) eine beim Einschraubvorgang mit dem schraubenkopfnahen Gewindeabschnitt (16) in Wirkverbindung bringbare Dübelhülse (12) fest und einstückig ausgebildet ist, daß der aus Verankerungsdübel (10) und Dübelhülse (12) bestehende Dübel (7) über dessen ganze Länge einen zumindest annähernd gleichbleibenden Außendurchmesser aufweist, daß der freie Innendurchmesser der Dübelhülse (12) annähernd dem Außendurchmesser (D) des dem freien Ende des Schaftes (14) der Schraube (8) zugewandten Gewindeabschnittes (15) entspricht, und daß die Dübelhülse (12) einen über wenigstens annähernd deren ganze Länge führenden Längsschlitz (17) aufweist, der am freien Ende der Dübelhülse (12) offen oder durch einen abreiß- oder brechbaren Steg verschlossen ist.

2. Befestigungselement nach Anspruch 1, dadurch gekennzeichnet, daß eine durch den Längsschlitz (17) gedachte Ebene (18) mit Abstand von der Dübelmittelachse (19) liegt.

3. Befestigungselement nach Anspruch 1, dadurch gekennzeichnet, daß der Verankerungsdübel (10) und die Dübelhülse (12) eine Außenprofilierung in Form von sägezahnartigen Rippen (20, 21) aufweisen, und daß die sägezahnartigen Rippen (20) am Verankerungsdübel (10) einerseits und die sägezahnartigen Rippen (21) an der Dübelhulse (12) andererseits gegeneinander gerichtet sind.

4. Befestigungselement nach Anspruch 3, dadurch gekennzeichnet, daß die sägezahnartigen Rippen (21) an der Dübelhülse (12) von in zwei oder mehreren, axial zueinander versetzten Rippenabschnitten (21', 21'') gebildet sind, welche jeweils über einen Teilbereich des Umfangs der Dübelhülse (12) führen.

5. Befestigungselement nach Anspruch 1 oder einem der vorhergehenden Ansprüche, dadurch gekennzeichnet, daß am Übergangsbereich (22) zwischen Dübelhülse (12) und Verankerungsdübel (19) zwei diametral einander gegenüberliegende und um eine Gewindesteigung der Schraube (8) axial zueinander versetzte und entsprechend der Gewindeneigung ausgerichtete Stege (23, 24) oder Noppen in das Dübelinnere abragen.

6. Befestigungselement nach Anspruch 1 oder einem der vorhergehenden Ansprüche, dadurch gekennzeichnet, daß der Verankerungsdübel (10) in annähernd radialer Richtung, jedoch spitzwinklig zu dessen Längsachse (19) ausgerichtete, frei auskragende, flügelartige Stege (30) und über den jeweiligen Bereich eines flügelartigen Steges (30) geführte Axialschlitze (31) aufweist.

7. Befestigungselement nach Anspruch 1, dadurch gekennzeichnet, daß der Schraubenkopf (9) zumindest annähernd den gleichen Außendurchmesser (S) aufweist wie der Dübel (7), und daß der Außendurchmesser (F) des schraubenkopfnahen Gewindeabschnittes (16) annähernd dem Durchmesser (S) des Schraubenkopfes (9) entspricht.

8. Befestigungselement nach Anspruch 1, dadurch gekennzeichnet, daß der Kerndurchmesser (K) des zweiten Gewindeabschnittes (16) annähernd dem Außendurchmesser (D) des ersten Gewindeabschnittes (15) der Schraube (8) entspricht.

9. Befestigungselement nach Anspruch 1 oder einem der vorhergehenden Ansprüche, dadurch gekennzeichnet, daß das freie Ende des Schaftes (14) der Schraube (8) eine Eindringspitze (37) aufweist.

## Claims

1. A fastening element comprising a screw and an anchoring dowel for mounting profiled elements, frames, panels or the like on a fixed substructure, wherein the screw has a first threaded portion (15) at the free end of the shank (14) to be screwed into an anchoring dowel (10) and a second threaded portion (16) near the screw head and of larger outer diameter than the first threaded portion (15), and both threaded portions (15, 16) have the same thread pitch, characterised in that a dowel sleeve (12) is formed rigidly and integrally with the anchoring dowel (10), which dowel sleeve (12) during the screwing-in operation can be brought into operative connection with the threaded portion (16) near the screw head, in that the dowel (7), which is composed of the anchoring dowel (10) and the dowel sleeve (12), is of at least approximately uniform outer diameter over its entire length, in that the free inner diameter of the dowel sleeve (12) corresponds approximately to the outer diameter (D) of the threaded portion (15) nearest the free end of the shank (14) of the screw (8), and in that the dowel sleeve (12) has a longitudinal slot (17) which extends over at least approximately the entire length thereof and which is open at the free end of the dowel sleeve (12) or is closed by a web which can torn away or broken off.

2. A fastening element according to Claim 1, characterised in that an imaginary plane (18) passing through the longitudinal slot (17) is situated at a distance from the dowel centre axis (19).

3. A fastening element according to Claim 1, characterised in that the anchoring dowel (10) and the dowel sleeve (12) have an outer profile section in the form of sawtooth-like ribs (20, 21), and in that the sawtooth-like ribs (20) on the anchoring dowel (10), on one hand, and the sawtooth-like ribs (21) on the dowel sleeve (12), on the other hand, are directed counter to one another.

4. A fastening element according to Claim 3, characterised in that the sawtooth-like ribs (21) on the dowel sleeve (12) are formed by two or more ribbed portions (21', 21'') which are axially staggered relative to one another and which each extend over a part of the periphery of the dowel sleeve (12).

5. A fastening element according to Claim 1 or any one of the preceding Claims, characterised in that in the transition zone (22) between the dowel sleeve (12) and the anchoring dowel (19) two webs (23, 24) or projections protrude into the dowel interior, which are situated diametrically opposite one another and are axially staggered relative to one another by one thread pitch of the screw (8) and which are aligned in conformity with the thread gradient.

6. A fastening element according to Claim 1 or any one of the preceding Claims, characterised in that the anchoring dowel (10) has freely protruding, wing-like webs (30) which are aligned in approximately radial direction but at an acute angle to the longitudinal axis (19) thereof, and has axial slots (31) extending over the respective portion of a wing-like web (30).

7. A fastening element according to Claim 1, characterised in that the screw head (9) has at least approximately the same outer diameter (S) as the dowel (7), and in that the outer diameter (F) of the threaded portion (16) near the screw head corresponds approximately to the diameter (S) of the screw head (9).

8. A fastening element according to Claim 1, characterised in that the core diameter (K) of the second threaded portion (16) corresponds approximately to the outer diameter (D) of the first threaded portion (15) of the screw (8).

9. A fastening element according to Claim 1 or any one of the preceding Claims, characterised in that the free end of the shank (14) of the screw (8) has a penetration tip (37).

## Revendications

1. Elément de fixation constitué d'une vis et d'une cheville d'ancrage, destiné au montage de profilés, de cadres, de plaques ou objets analogues sur une infrastructure rigide, dans lequel la vis comporte à l'extrémité libre de sa tige (14) une première partie filetée (15) se vissant dans une cheville d'ancrage (10) et une seconde partie (16), du côté de la tête de vis et de diamètre supérieur à celui de la première partie, les deux parties étant filetées à la même inclinaison, caractérisé en ce que la cheville d'ancrage (10) est solidaire monobloc d'une douille de cheville (12) qui pendant le vissage peut venir coopérer avec la partie filetée (16) proche de la tête de vis, la douille (7) constituée de la cheville d'ancrage (10) et de la douille de cheville (12) présentant sur toute sa longueur, un diamètre extérieurement au moins sensiblement constant tandis que le diamètre interne de la douille de cheville (12) correspond sensiblement au diamètre externe (D) de la partie filetée (15) tournée vers l'extrémité libre de la tige (14) de le vis (8) et en ce que la douille de cheville (12) présente sur au moins toute sa longueur, une fente longitudinale (17) débouchant à l'extrémité de la douille de cheville (12) et obturée par une barrette arrachable ou fracturable.

2. Elément de fixation selon la revendication 1, caractérisé en ce que le plan défini par la fente longitudinale (17) est décalé par rapport à l'axe central (19), de la cheville.

3. Elément de fixation selon la revendication 1, caractérisé en ce que la cheville d'ancrage (10) et la cheville (12) ont un profil externe constitué de nervures en dents de scie (20, 21), et en ce que les nervures (20) portées par la cheville d'ancrage (10) d'une part, et les nervures (21) portées par la douille (12) d'autre part, étant orientées en sens contraires.

4. Elément de fixation selon la revendication 3, caractérisé en ce que les nervures en dents de scie (21) portées par la douille de cheville (12) sont formées en au moins deux ou plusieurs sections (21', 21''), décalées axialement qui commandent chaque fois la cheville (12) par l'intermédiaire d'une zone partielle de la périphérie.

5. Elément de fixation selon la revendication 1, ou une des revendications précédentes, caractérisé en ce que, dans la zone de transition (22) entre la cheville (12) et la cheville d'ancrage (19), deux barrettes ou dents (23, 24) débordent à l'intérieur de la cheville, ces éléments étant diamétralement opposés l'un à l'autre, décalés axialement d'un pas de la vis (8) et orientés selon la pente de filetage considéré.

6. Elément de fixation selon la revendication 1 ou une des revendications précédentes, caractérisé en ce que la cheville d'ancrage (10) comporte des barrettes (30) en forme d'ailerons débordants, de direction sensiblement radiale mais faisant toutefois un léger angle aigu par rapport à l'axe central (19) de la cheville, ainsi qu'une fente (31) de direction axiale au niveau de chacun de ailerons (30).

7. Elément d fixation selon la revendication 1, caractérisé en ce que la tête de vis (9) a au moins approximativement le même diamètre externe (S) que la cheville (7) tandis que le diamètre externe (F) de la partie filetée (16) voisine de la tête est sensiblement égal au diamètre (S) de la tête de la vis (9).

8. Elément de fixation selon la revendication 1, caractérisé en ce que le diamètre (K) du noyau de la seconde partie filetée (16) correspond sensiblement au diamètre (D) de la première partie filetée (15) de la vis (8).

9. Elément de fixation selon la revendication 1 ou une des revendications précédentes, caractérisé en ce que l'extrémité libre de la tige (14) de la vis (8) est équipée d'une pointe de pénétration (37).
